(19)

Europäisches
Patentamt
European
Patent Office
Office européen
des brevets

(11) **EP 4 351 092 A1**

(12) **EUROPEAN PATENT APPLICATION**
published in accordance with Art. 153(4) EPC

(43) Date of publication:
**10.04.2024 Bulletin 2024/15**

(21) Application number: **22811128.2**

(22) Date of filing: **28.04.2022**

(51) International Patent Classification (IPC):
*H04L 12/28* (2006.01)   *F24F 11/46* (2018.01)
*F24F 11/70* (2018.01)   *F24F 11/72* (2018.01)
*G05D 23/19* (2006.01)

(52) Cooperative Patent Classification (CPC):
**F24F 11/46; F24F 11/70; F24F 11/72; G05D 23/19;
H04L 12/28;** Y02B 20/40

(86) International application number:
**PCT/JP2022/019338**

(87) International publication number:
**WO 2022/249854 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.05.2021 JP 2021088690**

(71) Applicant: **Panasonic Intellectual Property
Management Co., Ltd.
Kadoma-shi, Osaka 571-0057 (JP)**

(72) Inventor: **HIRAMATSU, Katsuhiko
Kadoma-shi, Osaka 571-0057 (JP)**

(74) Representative: **Appelt, Christian W.
Boehmert & Boehmert
Anwaltspartnerschaft mbB
Pettenkoferstrasse 22
80336 München (DE)**

(54) **ZONE CONTROL SYSTEM, CONTROL DEVICE, CONTROL METHOD, AND PROGRAM**

(57)     A zone control system (200) includes one or more environment control devices that individually control, according to operation parameters, the respective spatial environments of the zones into which a space (500) is divided, the operation parameters each corresponding to a different one of the zones, and a control device (100) that determines the respective area proportions of the zones according to selection parameters, and operates the one or more environment control devices to give the zones the respective area proportions, the selection parameters including, for each of users of the space, N selection parameters each of which is assigned a rank by the user, the N selection parameters being selected by each of the users from among the operation parameters, where N is an integer greater than or equal to 2.

FIG. 2

**Description**

[Technical Field]

The present disclosure relates to a zone control system, a control device, and a control method that are used for controlling the spatial environments of the zones of a space.

[Background Art]

In recent years, the concept of unassigned seating, where employees do not have assigned desks, has been suggested in terms of, for example, improving flexibility in working style. In such a working style, each user can select a desired zone and work in the selected zone. When selecting a zone, the user determines whether the zone meets their preference from the spatial environment of the zone. Regarding a zone selected and used by a user according to their preference, Patent Literature (PTL) 1 discloses an air conditioning control system that can provide a zone in which the setting temperature of an air conditioning device is relatively high and a zone in which the setting temperature of an air conditioning device is relatively low.

[Citation List]

[Patent Literature]

[PTL 1] Japanese Unexamined Patent Application Publication No. 2018-146212

[Summary of Invention]

[Technical Problem]

It cannot be said that the air conditioning control system disclosed in Patent Literature 1 can properly control spatial environments in terms of efficient use of space.

In view of the above, the present disclosure aims to provide a zone control system, a control device, a control method, and a program with which spatial environments can be controlled more properly.

[Solution to Problem]

A zone control system according to one aspect of the present disclosure includes one or more environment control devices that individually control, according to operation parameters, the respective spatial environments of zones into which a space is divided, the operation parameters each corresponding to a different one of the zones, and a control device that determines the respective area proportions of the zones according to selection parameters, and operates the one or more environment control devices to give the zones the respective area proportions, the selection parameters including, for each of users of the space, N selection parameters each of which is assigned a rank by the user, the N selection parameters being selected by each of the users from among the operation parameters, where N is an integer greater than or equal to 2.

A control device according to another aspect of the present disclosure is the control device described above.

A control method according to still another aspect of the present disclosure is a control method for operating one or more environment control devices that individually control, according to operation parameters, the respective spatial environments of zones into which a space is divided, the operation parameters each corresponding to a different one of the zones. The control method includes determining the respective area proportions of the zones according to selection parameters, the selection parameters including, for each of users of the space, N selection parameters each of which is assigned a rank by the user, the N selection parameters being selected by each of the users from among the operation parameters, where N is an integer greater than or equal to 2, and operating the one or more environment control devices to give the zones the respective area proportions.

In addition, still another aspect of the present disclosure can be embodied as a program for causing a computer to execute the above control method. Alternatively, still another aspect of the present disclosure can be embodied as a non-transitory computer-readable recording medium having recorded thereon the program.

[Advantageous Effects of Invention]

By using the present disclosure, it is possible to control spatial environments more properly.

[Brief Description of Drawings]

[FIG. 1A]

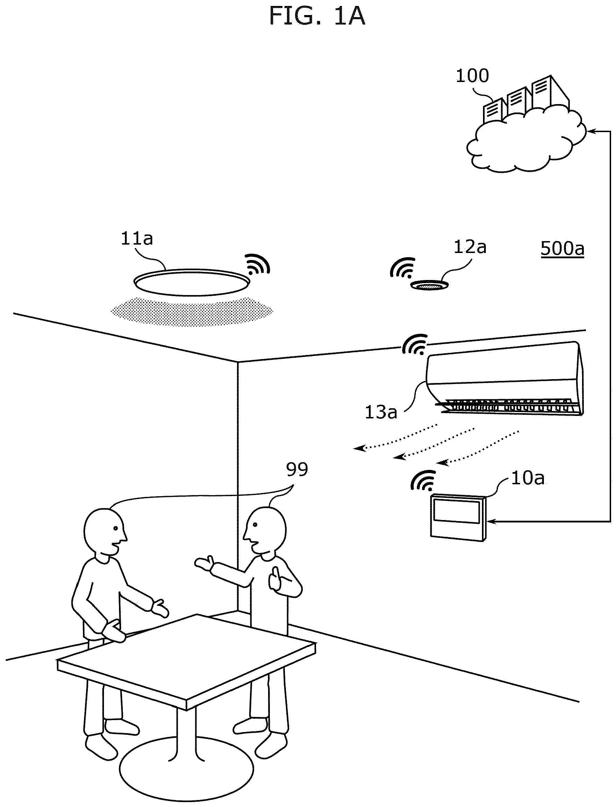

FIG. 1A is a first overview drawing illustrating an example of use of a zone control system according to an embodiment.
[FIG. 1B]

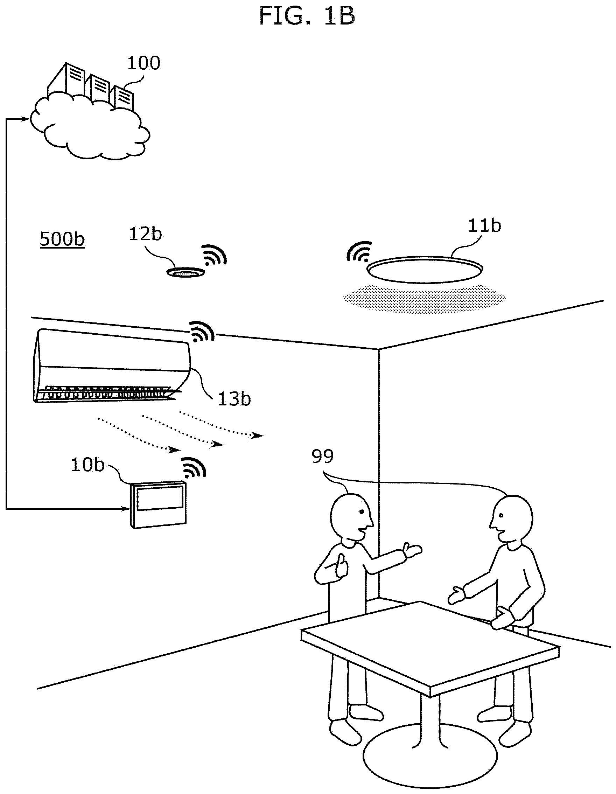

FIG. 1B is a second overview drawing illustrating an example of use of the zone control system according to the embodiment.
[FIG. 2]

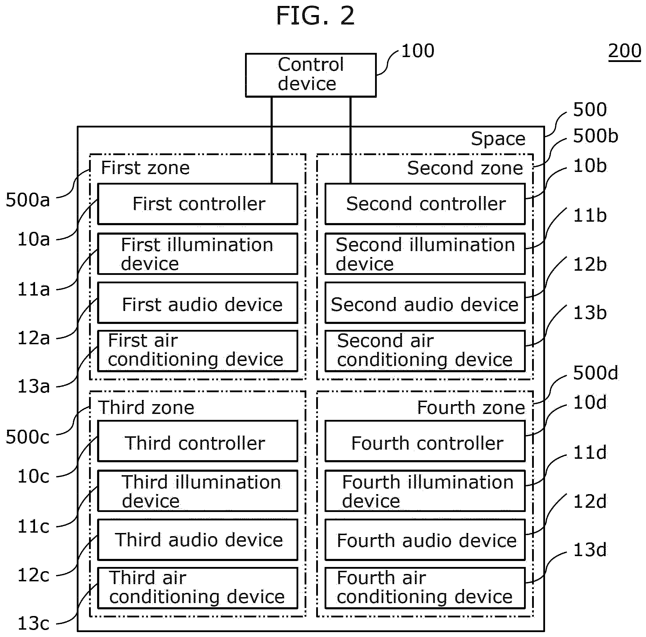

FIG. 2 is a block diagram illustrating a functional configuration of the zone control system according to the embodiment.
[FIG. 3]

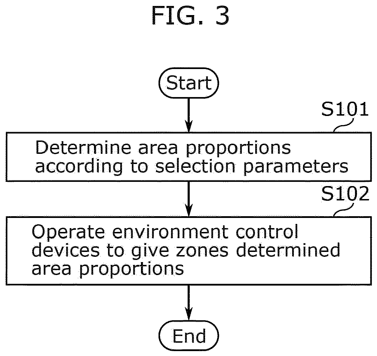

FIG. 3 is a flowchart illustrating an example of operation of the zone control system according to the embodiment.

[Description of Embodiments]

A zone control system, a control device, and a control method according to an embodiment of the present disclosure are described below in detail with reference to the drawings. It should be noted that the embodiment described below shows a specific example of the present disclosure. The numerical values, shapes, materials, structural elements, the arrangement and connection of the structural elements, steps, order of the steps, and other descriptions indicated in the following embodiment are mere examples, and therefore do not intend to limit the present disclosure. In addition, among the structural elements according to the embodiment, those not recited in any of the independent claims are described as optional structural elements.

The drawings are schematic views and are not necessarily precise illustrations. Thus, the scales used in the drawings are not necessarily the same. In the drawings, substantially the same structural elements are assigned the same reference symbol, and overlapping explanations are omitted or simplified.

[Embodiment]

[Overview]

An overview of a zone control system according to an embodiment is described with reference to FIGS. 1A and 1B. FIG. 1A is a first overview drawing illustrating an example of use of the zone control system according to the embodiment. FIG. 1B is a second overview drawing illustrating an example of use of the zone control system according to the embodiment. FIGS. 1A and 1B illustrate situations in which users 99 are using space 500 (see FIG. 2, which is described later). FIG. 1A illustrates a situation in first zone 500a of space 500. FIG. 1B illustrates a situation in second zone 500b of space 500. In addition, as illustrated in FIG. 2, which is explained later, in the embodiment, space 500 includes four zones including third zone 500c and fourth zone 500d.

In the embodiment, space 500 is divided into first zone 500a, second zone 500b, third zone 500c, and fourth zone 500d, and a different spatial environment is set in each zone. Each user 99 selects a zone according to their preference. In the embodiment described below, space 500 includes the four zones: first zone 500a, second zone 500b, third zone 500c, and fourth zone 500d. Here, two users 99 are present in each of first zone 500a and second zone 500b. In the embodiment, as illustrated in the figures, spatial environments are set to cause each zone of space 500 to have an approximately uniform density of users 99 (to achieve an approximately uniform number of users per area. That is, in the embodiment, by zone control system 200 (see FIG. 2, which is explained later) operating, the density of users 99 in each zone is approximately equalized. In the embodiment, when setting the zones in consideration of the density of users 99, the density in the space can be approximately equalized by changing the uniform area proportions of the zones set in the beginning with the smallest change possible. Thus, in the embodiment, (extreme) control that lacks energy efficiency need not be performed.

It should be noted that after approximate equalization of density used in the present disclosure, the number of users 99 in each of the zones of space 500 is equal to the number of users obtained by dividing the number of users 99 of space 500 by the area proportion of the zone.

However, approximate equalization is not limited to an exactly uniform density in each zone. For example, in the case where the number of users 99 is less than 10, an error of around one or two persons may occur. Such an error may naturally occur since the preference of each user 99 changes with elapse of time. In another case, an error may occur when one person who becomes the remainder of dividing three users 99 by two zones uses one of the zones. Likewise, in the embodiment, in the case where the number of users 99 is 10 or more, even if an error of around several % to 20% is seen, the number of users in each zone may be considered equalized. Furthermore, equalization of density described here requires voluntary movement of users 99 to a zone with a low user density. Thus, according to the number of users 99 who are not willing to voluntarily move, the above error is increased where necessary. However, in the embodiment, a zone with a low user density relatively meets the preferences of users 99 present in a zone with a high user density. Thus, even a small tendency to voluntarily move to the zone with a low user density is seen, space 500 having a uniform user density can be achieved.

In the embodiment, as an example, space 500 includes the four zones. However, space 500 may include two, three, or five or more zones.

As illustrated in FIG. 1A, in the embodiment, the spatial environment of first zone 500a is controlled by first illumination device 11a, first audio device 12a, and first air conditioning device 13a. First illumination device 11a, first audio device 12a, and first air conditioning device 13a are examples of environment control devices. It should be noted that only one type of environment control device may be provided. In this case, only one of first illumination device 11a, first audio device 12a, or first air conditioning device 13a may be provided.

As illustrated in FIG. 1B, in the embodiment, the spatial environment of second zone 500b is controlled by second illumination device 11b, second audio device 12b, and second air conditioning device 13b. Second illumination device 11b, second audio device 12b, and second air conditioning device 13b are examples of the environment control devices. It should be noted that only one type of environment control device may be provided. In this case, only one of second illumination device 11b, second audio device 12b, or second air conditioning device 13b may be provided.

A total of four zones are present, including third zone 500c and fourth zone 500d, which are similar to the zones illustrated in FIGS. 1A and 1B.

In the embodiment, an illumination device, an audio device, and an air conditioning device are provided in each of first zone 500a, second zone 500b, third zone 500c, and fourth zone 500d. However, if one device capable of controlling the spatial environments of the zones is provided, the above environment control devices need not be provided in each zone. Accordingly, even if just one environment control device is provided in space 500, the spatial environments of the zones can be controlled more properly.

In the embodiment, as an example, an illumination device, an audio device, and an air conditioning device are included as environment control devices. In addition to the above-mentioned devices, any devices, such as a ventilator, a humidifier, a perfume component generator, and an air purifier, can be used as environment control devices, as long as the devices can control one or more factors of the spatial environments of space 500.

[Configuration]

With reference to FIG. 2 as well as FIGS. 1A and 1B, a configuration of zone control system 200 is described below. FIG. 2 is a block diagram illustrating a functional configuration of the zone control system according to the embodiment. Zone control system 200 according to the embodiment includes control device 100 and environment control devices arranged in each of the zones of space 500.

In first zone 500a, first illumination device 11a, first audio device 12a, and first air conditioning device 13a are connected to control device 100 via first controller 10a. Control device 100 is embodied as, for example, a cloud server or an edge server and can be provided in a place physically distant from space 500 or inside space 500. First controller 10a and control device 100 are communicably connected to each other via a communication line, such as the Internet. However, a connection method and a communication method are not limited to the above-mentioned methods.

First controller 10a is a device for communicably connecting control device 100 and each of first illumination device 11a, first audio device 12a, and first air conditioning device 13a. For instance, first controller 10a receives, for example, a signal from control device 100 via the communication line, and transmits the received signal to first illumination device 11a, first audio device 12a, and first air conditioning device 13a by wireless communication. In addition, first controller 10a receives signals from first illumination device 11a, first audio device 12a, and first air conditioning device 13a by wireless communication, and transmits the signals to control device 100 via the communication line. It should be noted that when each of first illumination device 11a, first audio device 12a, and first air conditioning device 13a can directly communicate with control device 100, first controller 10a does not have to be included.

Control device 100 transmits an operation parameter for operating first illumination device 11a, first audio device 12a, and first air conditioning device 13a to each of the devices via first controller 10a. Thus, each device can operate according to the operation parameter transmitted from control device 100.

First illumination device 11a controls the brightness in first zone 500a as a factor of the spatial environment of first zone 500a. First illumination device 11a is a brightness adjustable illumination device that can obtain a numerical value specifying a brightness from the received operation parameter and adjust the luminance to provide the brightness corresponding to the numerical value. It should be noted that first illumination device 11a may be a device that controls the color temperature in first zone 500a as a factor of the spatial environment of first zone 500a. In this case, first illumination device 11a obtains a numerical value specifying a color temperature from the received operation parameter and adjusts the color of light according to the color temperature corresponding to the numerical value.

First audio device 12a controls the sound in first zone 500a as a factor of the spatial environment of first zone 500a. First audio device 12a can obtain a numerical value specifying a sound volume from the received operation parameter and produce sound such as background music at the sound volume corresponding to the numeral value. It should be noted that first audio device 12a may be a device that controls the noise in first zone 500a as a factor of the spatial environment of first zone 500a. In this case, first audio device 12a is an active noise canceler that obtains a numerical value specifying a noise removal level from the received operation parameter and removes the noise at the level corresponding to the numerical value.

First air conditioning device 13a controls the temperature in first zone 500a as a factor of the spatial environment of first zone 500a. First air conditioning device 13a can obtain a numerical value specifying a temperature from the received operation parameter and cools or warms first zone 500a until the target temperature is reached, by controlling the air flow rate of a fan to cause the zone temperature to reach the temperature corresponding to the numerical value. It should be noted that first air conditioning device 13a may be a fan device that controls the volume of air flowing in first zone 500a as a factor of the spatial environment in first zone 500a. In this case, first air conditioning device 13a obtains, from the received operation parameter, a numerical value specifying the volume of air flowing in the zone and controls the fan to achieve the volume of air flowing in the zone corresponding to the numerical value.

In second zone 500b, second illumination device 11b, second audio device 12b, and second air conditioning device 13b are connected to control device 100 via second controller 10b. Second controller 10b and control device 100 are communicably connected to each other via a communication line, such as the Internet. However, a connection method and a communication method are not limited to the above-mentioned methods.

Second controller 10b is a device for communicably connecting control device 100 and each of second illumination device 11b, second audio device 12b, and second air conditioning device 13b. For instance, second controller 10b receives, for example, a signal from control device 100 via the communication line, and transmits the received signal to second illumination device 11b, second audio device 12b, and second air conditioning device 13b by wireless communication. In addition, second controller 10b receives signals from second illumination device 11b, second audio device 12b, and second air conditioning device 13b by wireless communication, and transmits the signals to control device 100 via the communication line. It should be noted that when each of second illumination device 11b, second audio device 12b, and second air conditioning device 13b can directly communicate with control device 100, second controller 10b does not have to be included.

Control device 100 transmits an operation parameter for operating second illumination device 11b, second audio device 12b, and second air conditioning device 13b to each of the devices via second controller 10b. Thus, each device can operate according to the operation parameter transmitted from control device 100.

Second illumination device 11b controls the brightness in second zone 500b as a factor of the spatial environment of second zone 500b. Second illumination device 11b is a brightness adjustable illumination device that can obtain a numerical value specifying a brightness from the received operation parameter and adjust the luminance to provide the brightness corresponding to the numerical value. It should be noted that second illumination device 11b may be a device that controls the color temperature in second zone 500b as a factor of the spatial environment of second zone 500b. In this case, second illumination device 11b obtains a numerical value specifying a color temperature from the received operation parameter and adjusts the color of light according to the color temperature corresponding to the numerical value.

Second audio device 12b controls the sound in second zone 500b as a factor of the spatial environment of second zone 500b. Second audio device 12b can obtain a numerical value specifying a sound volume from the received operation parameter and produce sound such as background music at the sound volume corresponding to the numeral value. It should be noted that second audio device 12b may be a device that controls the noise in second zone 500b as a factor of the spatial environment of second zone 500b. In this case, second audio device 12b is an active noise canceler that obtains a numerical value specifying a noise removal level from the received operation parameter and removes the noise at the level corresponding to the numerical value.

Second air conditioning device 13b controls the temperature in second zone 500b as a factor of the spatial environment of second zone 500b. Second air conditioning device 13b can obtain a numerical value specifying a temperature from the received operation parameter and cools or warms second zone 500b until the target temperature is reached, by controlling the air flow rate of a fan to cause the zone temperature to reach the temperature corresponding to the numerical value. It should be noted that second air conditioning device 13b may be a fan device that controls the volume of air flowing in second zone 500b as a factor of the spatial environment of second zone 500b. In this case, second air conditioning device 13b obtains, from the received operation parameter, a numerical value specifying the volume of air flowing in the zone and controls the fan to achieve the volume of air flowing in the zone corresponding to the numerical value.

In third zone 500c, third illumination device 11c, third audio device 12c, and third air conditioning device 13c are connected to control device 100 via third controller 10c. Third controller 10c and control device 100 are communicably connected to each other via a communication line, such as the Internet. However, a connection method and a communication method are not limited to the above-mentioned methods.

Third controller 10c is a device for communicably connecting control device 100 and each of third illumination device 11c, third audio device 12c, and third air conditioning device 13c. For instance, third controller 10c receives, for example, a signal from control device 100 via the communication line, and transmits the received signal to third illumination device 11c, third audio device 12c, and third air conditioning device 13c by wireless communication. In addition, third controller 10c receives signals from third illumination device 11c, third audio device 12c, and third air conditioning device 13c by wireless communication, and transmits the signals to control device 100 via the communication line. It should be noted that when each of third illumination device 11c, third audio device 12c, and third air conditioning device 13c can directly communicate with control device 100, third controller 10c does not have to be included.

Control device 100 transmits an operation parameter for operating third illumination device 11c, third audio device 12c, and third air conditioning device 13c to each device via third controller 10c. Thus, each device can operate according to the operation parameter transmitted from control device 100.

Third illumination device 11c controls the brightness in third zone 500c as a factor of the spatial environment of third zone 500c. Third illumination device 11c is a brightness adjustable illumination device that can obtain a numerical value specifying a brightness from the received operation parameter and adjust the luminance to provide the brightness corresponding to the numerical value. It should be noted that third illumination device 11c may be a device that controls the color temperature in third zone 500c as a factor of the spatial environment of third zone 500c. In this case, third illumination device 11c obtains a numerical value specifying a color temperature from the received operation parameter and adjusts the color of light according to the color temperature corresponding to the numerical value.

Third audio device 12c controls the sound in third zone 500c as a factor of the spatial environment of third zone 500c. Third audio device 12c can obtain a numerical value specifying a sound volume from the received operation parameter and produce sound such as background music at the sound volume corresponding to the numeral value. It should be noted that third audio device 12c may be a device that controls the noise in third zone 500c as a factor of the spatial environment of third zone 500c. In this case, third audio device 12c is an active noise canceler that obtains a numerical value specifying a noise removal level from the received operation parameter and removes the noise at the level corresponding to the numerical value.

Third air conditioning device 13c controls the temperature in third zone 500c as a factor of the spatial environment of third zone 500c. Third air conditioning device 13c can obtain a numerical value specifying a temperature from the received operation parameter and cools or warms third zone 500c until the target temperature is reached, by controlling the air flow rate of a fan to cause the zone temperature to reach the temperature corresponding to the numerical value. It should be noted that third air conditioning device 13c may be a fan device that controls the volume of air flowing in third zone 500c as a factor of the spatial environment of third zone 500c. In this case, third air conditioning device 13c obtains, from the received operation parameter, a numerical value specifying the volume of air flowing in the zone and controls the fan according to the volume of air flowing in the zone corresponding to the numerical value.

In fourth zone 500d, fourth illumination device 11d, fourth audio device 12d, and fourth air conditioning device 13d are connected to control device 100 via fourth controller 10d. Fourth controller 10d and control device 100 are communicably connected to each other via a communication line, such as the Internet. However, a connection method and a communication method are not limited to the above-mentioned methods.

Fourth controller 10d is a device for communicably connecting control device 100 and each of fourth illumination device 11d, fourth audio device 12d, and fourth air conditioning device 13d. For instance, fourth controller 10d receives, for example, a signal from control device 100 via the communication line, and transmits the received signal to fourth illumination device 11d, fourth audio device 12d, and fourth air conditioning device 13d by wireless communication. In addition, fourth controller 10d receives signals from fourth illumination device 11d, fourth audio device 12d, and fourth air conditioning device 13d by wireless communication, and transmits the signals to control device 100 via the communication line. It should be noted that when each of fourth illumination device 11d, fourth audio device 12d, and fourth air conditioning device 13d can directly communicate with control device 100, fourth controller 10d does not have to be included.

Control device 100 transmits an operation parameter for operating fourth illumination device 11d, fourth audio device 12d, and fourth air conditioning device 13d to each device via fourth controller 10d. Thus, each device can operate according to the operation parameter transmitted from control device 100.

Fourth illumination device 11d controls the brightness in fourth zone 500d as a factor of the spatial environment of fourth zone 500d. Fourth illumination device 11d is a brightness adjustable illumination device that can obtain a numerical value specifying a brightness from the received operation parameter and adjust the luminance to provide the brightness corresponding to the numerical value. It should be noted that fourth illumination device 11d may be a device that controls the color temperature in fourth zone 500d as a factor of the spatial environment of fourth zone 500d. In this case, fourth illumination device 11d obtains a numerical value specifying a color temperature from the received operation parameter and adjusts the color of light according to the color temperature corresponding to the numerical value.

Fourth audio device 12d controls the sound in fourth zone 500d as a factor of the spatial environment of fourth zone 500d. Fourth audio device 12d can obtain a numerical value specifying a sound volume from the received operation parameter and produce sound such as background music at the sound volume corresponding to the numeral value. It should be noted that fourth audio device 12d may be a device that controls the noise in fourth zone 500d as a factor of the spatial environment of fourth zone 500d. In this case, fourth audio device 12d is an active noise canceler that obtains a numerical value specifying a noise removal level from the received operation parameter and removes the noise at the level corresponding to the numerical value.

Fourth air conditioning device 13d controls the temperature in fourth zone 500d as a factor of the spatial environment of fourth zone 500d. Fourth air conditioning device 13d can obtain a numerical value specifying a temperature from the received operation parameter and cools or warms fourth zone 500d until the target temperature is reached, by controlling the air flow rate of a fan to cause the zone temperature to reach the temperature corresponding to the numerical value. It should be noted that fourth air conditioning device 13d may be a fan device that controls the volume of air flowing in fourth zone 500d as a factor of the spatial environment of fourth zone 500d. In this case, fourth air conditioning device 13d obtains, from the received operation parameter, a numerical value specifying the volume of air flowing in the zone and controls the fan according to the volume of air flowing in the zone corresponding to the numerical value.

Here, control device 100 determines, as separate parameters, an operation parameter for first zone 500a, an operation parameter for second zone 500b, an operation parameter for third zone 500c, and an operation parameter for fourth zone 500d and transmits the respective operation parameters to first controller 10a, second controller 10b, third controller 10c, and fourth controller 10d. Accordingly, the operation parameters that are equal in number to the zones of space 500 are determined, and each of the operation parameters is transmitted to the corresponding environment control devices via the controller of each zone. Each of the determined operation parameters includes numerical values specifying the operation of the illumination device, the operation of the audio device, and the operation of the air conditioning device. Thus, the operation parameters equal in number to the zones of space 500 are generated. Meanwhile, when operation parameters, each of which specifies the operation of one of the illumination device, the audio device, and the air conditioning device, are generated, one for each device, the number of the operation parameters is equal to a number obtained by multiplying the number of the zones by the number of the devices provided in each zone.

Although details are described later, the operation parameters are operation parameters for use in approximately equalizing the density of users 99 in each of the zones of space 500. More specifically, control device 100 specifies, in each operation parameter, the area proportion of a zone corresponding to the operation parameter. To achieve the area proportion of the zone in the area of space 500, the area affected by various environment control devices is controlled. Thus, by the environment control devices provided in each zone operating according to the corresponding operation parameter, the spatial environments of the zones become spatial environments that enable approximate equalization of the density of users 99 in each zone.

For instance, as with PTL 1, which is recited in Background Art, if a relatively-high-temperature setting zone and a relatively-low-temperature setting zone were just provided, and if many users 99 prefer a relatively high temperature, users 99 would gather in the relatively-high-temperature setting zone. In this case, an issue arises in which the relatively-low-temperature setting zone is not efficiently used. Furthermore, some of users 99 who prefer a relatively high temperature may involuntarily use the relatively-low-temperature setting zone. In such a case, the users may not be able to satisfactorily use the space. Here, if the area of the relatively-high-temperature setting zone is enlarged according to the number of users who prefer a relatively high setting temperature, the density is equalized. However, zone control needs to be significantly changed (that is, control to add a portion of the relatively-low-temperature setting zone to the relatively-high-temperature setting zone needs to be performed). The above control is not energy efficient. Moreover, depending on the situation, temperature control may fail in a boundary portion between zones.

Meanwhile, in the embodiment, users 99 who can accept a relatively low setting temperature are detected from users 99 who prefer a relatively high setting temperature, and the areas of the zones can be set in consideration of the number of users 99 detected. Thus, a situation that requires a significant change of zone control is less likely to occur in comparison with when the areas of zones are set simply according to the number of users who prefer a relatively high setting temperature. While voluntarily mitigating the high-and-low-density portions in the space, users 99 can use their acceptable zones, which can suppress, without a significant change of control, dissatisfaction from being caused.

[Operation]

Operation of zone control system 200 according to the embodiment is described below with reference to FIG. 3. FIG. 3 is a flowchart illustrating an example of operation of the zone control system according to the embodiment.

It should be noted that the processing described below is performed prior to the operation illustrated in the flowchart. In the processing, selection parameters are selected according to the preference of each user 99 by, for example, conducting a survey of users 99 of space 500, and the selection parameters are stored in storage (not illustrated) or another medium. Each selection parameter includes numerical values related to the factors of a spatial environment that meets the preference of user 99, the factors including the brightness provided by the illumination device, the volume of sound produced by the audio device, and the temperature controlled by air conditioning device. It should be noted that the brightness, the sound volume, and the temperature are numerical values of different scales. However, the selection parameter includes standardized numerical values in which the scales of the factors are converted into a standard scale of 1 to 10 or a standard scale of 1 to 100, for example.

When users 99 of space 500 are not regular users 99, that is, when the breakdown of users 99 of space 500 at a point in time is different from the breakdown of users 99 of space 500 at another point in time, another operation to identify users 99 needs to be performed. For instance, the operation described below is performed prior to the operation illustrated in the flowchart. In the operation, at the time point at which zone control system 200 starts operating, users 99 of space 500 are identified from among all users 99 having a possibility of using space 500, and selection parameters selected by users 99 of space 500 are read from the storage. Users 99 may be identified by providing a gate that requires ID authentication at the entrance of space 500 and identifying using verification data or by capturing the images of users 99 of space 500 and identifying using an image recognition technique or another technique.

After performing the above operation, as illustrated in FIG. 3, control device 100 determines the area proportions of the zones appropriate for users 99 currently using the space, according to the selection parameters (S101).

Some examples about determination of the area proportions of the zones are explained. For instance, control device 100 determines the respective area proportions of the zones according to selection parameters, the selection parameters including, for each of users 99 of space 500, N selection parameters each of which is assigned a rank by user 99 according to the preference of user 99, the N selection parameters being selected from among operation parameters by each user 99, where N is an integer greater than or equal to 2.

That is, each user 99 assigns the first rank, the second rank, ... the (N - 1)th rank, and the Nth rank to selection parameters according to whether the parameter meets the preference of user 99. Selection parameters assigned top ranks are parameters that are likely to be selected by user 99 or acceptable to user 99. Thus, user 99 is likely to select zones in which environment control devices are operating according to operation parameters corresponding to the selection parameters assigned the top ranks. Meanwhile, selection parameters assigned bottom ranks are less likely to meet the preference of user 99. Thus, user 99 is less likely to select zones in which environment control devices are operating according to operation parameters corresponding to the selection parameters assigned the bottom ranks.

For instance, selection parameters assigned the first rank and the second rank are likely to be selected by each user 99 even if user 99 is encouraged to move to another zone in order to equalize the density. In this case, by listing the selection parameters assigned the first rank and the second rank by each user 99, it is possible to determine the area proportions of the zones so that a change from the original area proportions of the zones is small. Thus, by using the selection parameters assigned the top ranks by each user 99, it is possible to determine the areas of the zones (as area proportions) in which dissatisfaction of users 99 is less likely to be caused, with a small change in the areas of the zones. It should be noted that how many top-ranked selection parameters are used may be determined on the basis of the number of users 99 or a numerical value determined experimentally or empirically. For instance, in the survey mentioned above, if each user is asked about the first to fifth ranks (N = 5), the numerical values of the ranks to be used are determined by the empirical rule, which, for example, shows that the top two ranks are likely to be acceptable.

Here, the method of calculating the area proportions by using top ranks is described below. For instance, when the top ranks are used, following equation (1) may be used.

[Math. 1]

$$S_A = S \times \frac{n_{A12}}{n_{A12} + n_{B12} + n_{C12} + n_{D12}}$$

It should be noted that in above equation (1), $S_A$ denotes the area of a zone after adjustment, and S denotes the area of entire space 500. Thus, the second term in the right-hand side in above equation (1) denotes the area proportion of the zone in the entire space. In addition, $n_{A12}$ denotes the number of users 99 who have assigned one of the first rank or the second rank to a selection parameter corresponding to an operation parameter for the zone. Likewise, $n_{B12}$ denotes the number of users 99 who have selected a selection parameter corresponding to an operation parameter for another zone. Likewise, $n_{C12}$ denotes the number of users 99 who have selected a selection parameter corresponding to an operation parameter for still another zone. Likewise, $n_{D12}$ denotes the number of users 99 who have selected a selection parameter corresponding to an operation parameter for yet another zone. In the example, the area value of a zone in the space including the four zones is calculated using the selection parameters assigned the first rank and the second rank.

In above equation 1, the selection parameters assigned the first rank and the second rank are used as equivalent selection parameters. However, when a selection parameter assigned a higher rank is used in above equation (1), greater weighting is given to the selection parameter.

In this case, following equations (2) to (5) may be substituted into above equation (1).

[Math. 2]

$$n_{A12} = n_A + \alpha(n_{BA} + n_{CA} + n_{DA})$$

[Math. 3]

$$n_{B12} = n_B + \alpha(n_{AB} + n_{CB} + n_{DB})$$

[Math. 4]

$$n_{C12} = n_C + \alpha(n_{AC} + n_{BC} + n_{DC})$$

[Math. 5]

$$n_{D12} = n_D + \alpha(n_{AD} + n_{BD} + n_{CD})$$

It should be noted that in above equations (2) to (5), $n_A$ denotes the number of users 99 who have assigned the first rank to the selection parameter corresponding to the operation parameter for the zone. Likewise, ne denotes the number of users 99 who have assigned the first rank to the selection parameter corresponding to the operation parameter for another zone. Likewise, $n_C$ denotes the number of users 99 who have assigned the first rank to the selection parameter corresponding to the operation parameter for still another zone. Likewise, $n_D$ denotes the number of users 99 who have assigned the first rank to the selection parameter corresponding to the operation parameter for yet another zone.

In addition, in above equation (2), $n_{BA}$ denotes the number of users 99 who have assigned the first rank to the selection parameter corresponding to the operation parameter for another zone and the second rank to the selection parameter corresponding to the operation parameter for the zone. Likewise, $n_{CA}$ denotes the number of users 99 who have assigned the first rank to the selection parameter corresponding to the operation parameter for still another zone and the second rank to the selection parameter corresponding to the operation parameter for the zone. Likewise, $n_{DA}$ denotes the number of users 99 who have assigned the first rank to the selection parameter corresponding to the operation parameter for yet another zone and the second rank to the selection parameter corresponding to the operation parameter for the zone. That is, the second term in the right-hand side denotes a numerical value obtained by multiplying, by coefficient $\alpha$, the total number of users 99 who have assigned the second rank to the selection parameter corresponding to the operation parameter for the zone.

Likewise, in above equations (3) to (5), the second term in the right-hand side denotes a numerical value obtained by multiplying, by coefficient $\alpha$, the total number of users 99 who have assigned the second rank to the selection parameter corresponding to the operation parameter for another zone, still another zone, or yet another zone. By setting a numerical value smaller than 1 to coefficient $\alpha$, it is possible to increase the weight of the selection parameter assigned the first rank, in comparison with the other selection parameters.

Meanwhile, in the case where an area value that should be assigned to the zone is predetermined, it is also possible to calculate how much portion of each of the other zones should be added to the zone, according to the number of users 99 who have assigned the second rank to the selection parameter corresponding to the operation parameter for the zone.

That is, the area proportion of the second zone included in the zones and different from the first zone can be decreased on the basis of the number of the users who have assigned the first rank to the selection parameter corresponding to the second zone and the second rank to the selection parameter corresponding to the first zone, the first rank being the highest rank, the second rank being next to the first rank. Then, the area proportion of the first zone can be increased by the amount of decrease in the area proportion of the second zone. This is performed as indicated in following equation (6).

[Math. 6]

$$S_{BA} = S_{Aext} \times \frac{n_{BA}}{n_{BA}+n_{CA}+n_{DA}}$$

It should be noted that in above equation (6), $S_{BA}$ denotes the area value of a portion of another zone to be added to the zone, and $S_{Aext}$ denotes the area value of an area by which the zone is increased. Here, in above equation (6), the fraction by which $S_{Aext}$ in the right-hand side is multiplied denotes the proportion of the area that is added from another zone, in the area by which the zone is enlarged.

In addition, in the case where an area value that should be assigned to the zone is predetermined, as another approach, it is also possible to calculate how much portion of each of the other zones should be added to the zone, according to the number of users 99 who have not assigned top ranks (here, the first rank and the second rank) to the selection parameter corresponding to the operation parameter for the zone.

That is, the area proportion of the second zone included in the zones and different from the first zone can be maintained on the basis of the number of the users who have assigned the first rank to the selection parameter corresponding to the second zone and the second rank to the selection parameter corresponding to a zone different from the first zone, the first rank being the highest rank, the second rank being next to the first rank. Then, the area proportion of the first zone can be increased by the amount that is not maintained from the area proportion of the second zone. This is performed as indicated in following equation (7).

[Math. 7]

$$S_{BA} = S_{Aext} \times \frac{\dfrac{1}{n_{BC}+n_{BD}}}{\dfrac{1}{n_{BC}+n_{BD}} + \dfrac{1}{n_{CB}+n_{CD}} + \dfrac{1}{n_{DB}+n_{DC}}}$$

As illustrated in FIG. 3, control device 100 operates the environment control devices to give the zones the determined area proportions (S102). As described above, the density of users 99 in each zone can be approximately equalized with a low level of dissatisfaction among the users, while keeping changes small. Accordingly, it is possible to achieve zone control system 200 that can control the spatial environments more properly.

[Advantageous Effects]

As described above, zone control system 200 according to the embodiment includes one or more environment control devices that individually control, according to operation parameters, the respective spatial environments of zones into which space 500 is divided, the operation parameters each corresponding to a different one of the zones, and control device 100 that determines the respective area proportions of the zones according to selection parameters, and operates the one or more environment control devices to give the zones the respective area proportions, the selection parameters including, for each of users 99 of the space, N selection parameters each of which is assigned a rank by the user, the N selection parameters being selected by each of users 99 from among the operation parameters, where N is an integer greater than or equal to 2.

Zone control system 200 controls the area proportions of the zones on the basis of two or more selection parameters selected by each of users 99. Here, user 99 is likely to select zones having spatial environments created by using operation parameters corresponding to the selection parameters. That is, the selection parameters meet the preference of user 99. Two or more selection parameters are selected for each user 99. Thus, the two or more selection parameters at least include a selection parameter corresponding to a spatial environment most likely to be selected and a selection parameter corresponding to a spatial environment next most likely to be selected. The selection parameter next most likely to be selected is a selection parameter corresponding to a spatial environment that is acceptable to the user.

Accordingly, when determining the spatial environments of the zones for users 99, the flexibility in determination of the spatial environments is increased, compared with when only one selection parameter corresponding to the spatial environment most likely to be selected by user 99 is used. This makes it possible to select the most-energy-efficient combination of the spatial environments of the zones from among more flexible selections of spatial environments or the combination of the spatial environments of the zones with the smallest change from current spatial environments.

While equalizing the density of users 99 in each zone to improve the efficiency of use of space 500, zone control system 200 need not make an extreme control change that lacks energy efficiency, and thus has advantages in terms of environmental load and cost.

The area proportion of first zone 500a out of the zones is the ratio of (b) the total number of users 99 who have selected, as at least one of the N selection parameters, a selection parameter corresponding to first zone 500a to (a) the total sum of users 99, across selection parameters corresponding to the zones, who have selected, as at least one of the N selection parameters, a selection parameter corresponding to one of the zones.

Thus, the area proportion of first zone 500a out of the zones can be calculated as the ratio of (b) to (a).

When (a) and (b) are calculated, greater weighting is given to a selection parameter assigned a higher rank.

Thus, the area proportion of each zone can be calculated by assigning superiority or inferiority to a selection parameter assigned a higher rank and a selection parameter assigned a lower rank according to the ranks assigned to the selection parameters by each user 99.

For instance, the area proportion of second zone 500b included in the zones and different from first zone 500a is decreased based on the number of users 99 who have assigned the first rank to a selection parameter corresponding to second zone 500b and the second rank to a selection parameter corresponding to first zone 500a, the first rank being the highest rank, the second rank being next to the first rank, and the area proportion of first zone 500a is increased by the amount of decrease in the area proportion of second zone 500b.

The zone (here, first zone 500a) that needs to be enlarged out of the zones is enlarged using a portion of another zone (here, second zone 500b). Here, since the selection parameter for the zone (first zone 500a) that needs to be enlarged is assigned the second rank, it is possible to obtain the area that needs to be added to the zone, by reducing the area of another zone (second zone 500b) according to the number of users 99 who are predicted to be able to move to the zone (first zone 500a).

For instance, the area proportion of a second zone included in the zones and different from a first zone is maintained based on the number of users who have assigned the first rank to a selection parameter corresponding to the second zone and the second rank to a selection parameter corresponding to a zone different from the first zone, the first rank being the highest rank, the second rank being next to the first rank, and the proportion of the first zone is increased by the amount that is not maintained from the area proportion of the second zone.

While a zone (here, second zone 500b) different from the zone to be enlarged (first zone 500a) is used, the selection parameter for the zone to be enlarged (first zone 500a) is not assigned the second rank. Thus, the minimum area proportion of another zone (second zone 500b) that should be maintained can be determined according to the number of users 99 who are not expected to move to the zone to be enlarged (first zone 500a). The area by which the zone is increased can be obtained from the area proportion other than the maintained area proportion of another zone.

In addition, control device 100 according to the embodiment is control device 100 included in zone control system 200 described above.

By operating the environment control devices, control device 100 can provide advantageous effects similar to those of zone control system 200 described above.

In addition, the control method according to the embodiment is a control method for operating one or more environment control devices that individually control, according to operation parameters, the respective spatial environments of zones into which a space is divided, the operation parameters each corresponding to a different one of the zones. The control method includes determining the respective area proportions of the zones according to selection parameters, the selection parameters including, for each of users of the space, N selection parameters each of which is assigned a rank by the user, the N selection parameters being selected by each of the users from among the operation parameters, where N is an integer greater than or equal to 2, and operating the one or more environment control devices to give the zones the respective area proportions.

The control method can provide advantageous effects similar to those of zone control system 200 described above.

In addition, a program according to the embodiment is a program for causing a computer to execute the above-mentioned control method.

By causing the computer to run the program, it is possible to execute the above-mentioned control method, and thus the program can provide advantageous effects similar to those of zone control system 200 described above.

[Other Embodiments]

The zone control system, the control method, the control method, and the program according to the present disclosure are described above on the basis of the embodiment. However, the present disclosure is not limited to the embodiment.

In the embodiment, processing performed by a specific processor may be performed by another processor. The order in which processing tasks are performed may be changed, or processing tasks may be performed in parallel.

The assignment of the structural elements of the zone control system to the devices is a mere example. For instance, a structural element of one device may be assigned to another device.

The processing described in the above embodiment may be achieved by performing centralized processing with the use of a single device (system) or by performing distributed processing with the use of multiple devices. The processor that executes the above program may be a single processor or multiple processors. That is, centralized processing or distributed processing may be performed.

In the embodiment, all or some of the structural elements, such as the controller, may be dedicated hardware or may be caused to function by executing a software program suitable for each structural element. Each structural element may be caused to function by a program executer, such as a central processing unit (CPU) or a processor, reading and executing a software program stored in a recording medium, such as an HDD or semiconductor memory.

In addition, a structural element such as a controller may be one electronic circuit or two or more electronic circuits. The one electronic circuit or each of the two or more electronic circuits may be a general-purpose circuit or a dedicated circuit.

The one electronic circuit or two or more electronic circuits may include, for example, a semiconductor device, an IC, or an LSI. The IC or LSI may be integrated into one chip or multiple chips. Here, an integrated circuit is referred to as an IC or an LSI. However, according to the level of integration, an integrated circuit may be referred to as a system LSI, a very large-scale integration (VLSI), or an ultra-large-scale integration (ULSI). A FPGA programed after manufacturing an LSI can be used for the same purpose.

In addition, a general or specific aspect of the present disclosure may be embodied as a system, a device, a method, an integrated circuit, or a computer program. Alternatively, a general or specific aspect of the present disclosure may be embodied as a non-transitory computer-readable recording medium in which the computer program is stored, such as an optical disk, an HDD, or semiconductor memory. A general or specific aspect of the present disclosure may be achieved in any combination of the system, the device, the method, the integrated circuit, the computer program, and the recording medium.

It should be noted that the present disclosure includes one or more embodiments obtained by making various changes conceived by those skilled in the art to the embodiment and one or more embodiments obtained through any combination of the structural elements and the functions according to the embodiment within the scope of the present disclosure.

[Reference Signs List]

11a    first illumination device (environment control device)
11b    second illumination device (environment control device)
11c    third illumination device (environment control device)
11d    fourth illumination device (environment control device)
12a    first audio device (environment control device)
12b    second audio device (environment control device)
12c    third audio device (environment control device)
12d    fourth audio device (environment control device)
13a    first air conditioning device (environment control device)
13b    second air conditioning device (environment control device)
13c    third air conditioning device (environment control device)
13d    fourth air conditioning device (environment control device)
99    user
100    control device
200    zone control system
500    space

**Claims**

1. A zone control system comprising:

   one or more environment control devices that individually control, according to operation parameters, respective spatial environments of a plurality of zones into which a space is divided, the operation parameters each corresponding to a different one of the plurality of zones; and

a control device that determines respective area proportions of the plurality of zones according to selection parameters, and operates the one or more environment control devices to give the plurality of zones the respective area proportions, the selection parameters including, for each of users of the space, N selection parameters each of which is assigned a rank by the user, the N selection parameters being selected by each of the users from among the operation parameters, where N is an integer greater than or equal to 2.

2. The zone control system according to claim 1,
wherein an area proportion of a first zone out of the plurality of zones is a ratio of (b) a total number of users who have selected, as at least one of the N selection parameters, a selection parameter corresponding to the first zone to (a) a total sum of users, across selection parameters corresponding to the plurality of zones, who have selected, as at least one of the N selection parameters, a selection parameter corresponding to one of the plurality of zones.

3. The zone control system according to claim 2,

wherein when (a) and (b) are calculated,
greater weighting is given to a selection parameter assigned a higher rank.

4. The zone control system according to claim 1,

wherein an area proportion of a second zone included in the plurality of zones and different from a first zone is decreased based on a total number of users who have assigned a first rank to a selection parameter corresponding to the second zone and a second rank to a selection parameter corresponding to the first zone, the first rank being a highest rank, the second rank being next to the first rank, and
an area proportion of the first zone is increased by an amount of decrease in the area proportion of the second zone.

5. The zone control system according to claim 1,

wherein an area proportion of a second zone included in the plurality of zones and different from a first zone is maintained based on a total number of users who have assigned a first rank to a selection parameter corresponding to the second zone and a second rank to a selection parameter corresponding to a zone different from the first zone, the first rank being a highest rank, the second rank being next to the first rank, and
an area proportion of the first zone is increased by an amount that is not maintained from the area proportion of the second zone.

6. The control device according to any one of claims 1 to 5.

7. A control method for operating one or more environment control devices that individually control, according to operation parameters, respective spatial environments of a plurality of zones into which a space is divided, the operation parameters each corresponding to a different one of the plurality of zones,
the control method comprising:

determining respective area proportions of the plurality of zones according to selection parameters, the selection parameters including, for each of users of the space, N selection parameters each of which is assigned a rank by the user, the N selection parameters being selected by each of the users from among the operation parameters, where N is an integer greater than or equal to 2; and
operating the one or more environment control devices to give the plurality of zones the respective area proportions.

8. A program for causing a computer to execute the control method according to claim 7.

# FIG. 1A

# FIG. 1B

## FIG. 2

200

Control device — 100

Space — 500

| First zone 500a | Second zone 500b |
|---|---|
| First controller 10a | Second controller 10b |
| First illumination device 11a | Second illumination device 11b |
| First audio device 12a | Second audio device 12b |
| First air conditioning device 13a | Second air conditioning device 13b |
| Third zone 500c | Fourth zone 500d |
| Third controller 10c | Fourth controller 10d |
| Third illumination device 11c | Fourth illumination device 11d |
| Third audio device 12c | Fourth audio device 12d |
| Third air conditioning device 13c | Fourth air conditioning device 13d |

# FIG. 3

```
        ┌─────────┐
        │  Start  │
        └─────────┘
             │
             ▼                        S101
┌──────────────────────────────────┐
│  Determine area proportions      │
│  according to selection parameters│
└──────────────────────────────────┘
             │
             ▼                        S102
┌──────────────────────────────────┐
│  Operate environment control     │
│  devices to give zones determined │
│  area proportions                │
└──────────────────────────────────┘
             │
             ▼
        ┌─────────┐
        │   End   │
        └─────────┘
```

## INTERNATIONAL SEARCH REPORT

| International application No. |
| --- |
| **PCT/JP2022/019338** |

### A. CLASSIFICATION OF SUBJECT MATTER

*H04L 12/28*(2006.01)i; *F24F 11/46*(2018.01)i; *F24F 11/70*(2018.01)i; *F24F 11/72*(2018.01)i; *G05D 23/19*(2006.01)i
FI: H04L12/28 500E; F24F11/46; F24F11/70; G05D23/19 Z; F24F11/72

According to International Patent Classification (IPC) or to both national classification and IPC

### B. FIELDS SEARCHED

Minimum documentation searched (classification system followed by classification symbols)

H04L12/28; F24F11/46; F24F11/70; F24F11/72; G05D23/19

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2020/241297 A1 (PANASONIC INTELLECTUAL PROPERTY MANAGEMENT CO., LTD.) 03 December 2020 (2020-12-03) <br> paragraphs [0041]-[0048] | 1-8 |
| A | JP 2011-187030 A (OMRON CORP) 22 September 2011 (2011-09-22) <br> paragraphs [0016], [0125] | 1-8 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **09 June 2022** | **21 June 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

International application No.

**PCT/JP2022/019338**

| Patent document cited in search report | | | Publication date (day/month/year) | Patent family member(s) | Publication date (day/month/year) |
|---|---|---|---|---|---|
| WO | 2020/241297 | A1 | 03 December 2020 | (Family: none) | |
| JP | 2011-187030 | A | 22 September 2011 | (Family: none) | |

Form PCT/ISA/210 (patent family annex) (January 2015)

**EP 4 351 092 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018146212 A